# EUROPÄISCHE PATENTANMELDUNG

(11) **EP 1 720 052 A1**
(43) Veröffentlichungstag der Anmeldung: **08.11.2006**
(21) Anmeldenummer: 06008982.8
(22) Anmeldetag: 29.04.2006
(51) Int. Cl.: G02B 21/00

(54) **Vorrichtung zur Steuerung von Lichtstrahlung**

(30) Priorität: 03.05.2005 DE 102005020545
(71) Anmelder: Carl Zeiss Microlmaging GmbH, 07745 Jena (DE)
(72) Erfinder: Wolleschensky, Ralf, 99510 Apolda (DE)
(74) Vertreter: Hampe, Holger

(57) **Zusammenfassung**

Vorrichtung zur Steuerung von in einer Probe angeregter und/oder rückgestreuter und/oder reflektierter Lichtstrahlung, die eine oder mehrere Wellenlängen enthält, auf unterschiedliche Lichtausgänge, wobei eine Trennung der Lichtstrahlung in zueinander unterschiedlich polarisierte Komponenten erfolgt und die Komponenten der Anregungs- und/oder Detektionsstrahlung mit Hilfe eines vorzugsweise die ordentliche und außerordentliche Brechzahl veränderndes, vorzugsweise doppelbrechenden, vorzugsweise akusto- oder elektrooptischen Mediums (S) in ihrer Polarisation beeinflußt werden.

## Beschreibung

Die Erfindung bezieht sich auf ein Verfahren und Anordnungen in der Mikroskopie, insbesondere der Fluoreszenzmikroskopie, der Laser Scanning Mikroskopie, der Fluoreszenz-Korrelationsspektroskopie und der Scanning Nahfeldmikroskopie, zur Untersuchung von vorwiegend biologischen Proben, Präparaten und zugehörigen Komponenten. Mit eingeschlossen sind auf Fluoreszenzdetektion basierende Verfahren zum Screenen von Wirkstoffen (High Throughput Sceening) sowie Verfahren der Durchflusszytometrie. Simultan-Untersuchungen von Proben mit Mehrfachfluorophoren in Echtzeit durch eine simultane Beleuchtung der Probe in mehreren Probenpunkten werden damit bei überlappenden Fluoreszenzspektren auch in räumlichen Strukturen von dicken Proben möglich.

Ein klassisches Anwendungsgebiet der Lichtmikroskopie zur Untersuchung von biologischen Präparaten ist die Fluoreszenzmikroskopie (Lit.: Pawley, "Handbook of biological confocal Microscopy"; Plenum Press 1995). Hierbei werden bestimmte Farbstoffe zur spezifischen Markierung von Zellteilen verwendet.
Die eingestrahlten Photonen einer bestimmten Energie regen die Farbstoffmoleküle durch die Absorption eines Photons aus dem Grundzustand in einen angeregten Zustand an. Diese Anregung wird meist als Einphotonen-Absorption bezeichnet. Die so angeregten Farbstoffmoleküle können auf verschiedene Weise in den Grundzustand zurückgelangen. In der Fluoreszenzmikroskopie ist der Übergang unter Aussendung eines Fluoreszenzphotons am wichtigsten. Die Wellenlänge des emittierten Photons ist aufgrund der Stokesverschiebung im Vergleich zur Anregungsstrahlung generell rot verschoben, besitzt also eine größere Wellenlänge. Die Stokesverschiebung ermöglicht die Trennung der Fluoreszenzstrahlung von der Anregungsstrahlung.
Das Fluoreszenzlicht wird mit geeigneten dichroitischen Strahlteilern in Kombination mit Blockfiltern von der Anregungsstrahlung abgespalten und getrennt beobachtet. Dadurch ist die Darstellung einzelner, mit verschiedenen Farbstoffen eingefärbten Zellteilen, möglich. Grundsätzlich können jedoch auch mehrere Teile eines Präparates gleichzeitig mit verschiedenen sich spezifisch anlagernden Farbstoffen eingefärbt werden (Mehrfachfluoreszenz). Zur Unterscheidung, der von den einzelnen Farbstoffen ausgesendeten Fluoreszenzsignale, werden wiederum spezielle dichroitischen Strahlteiler verwendet.

Neben der Anregung der Farbstoffmoleküle mit einem hoch energetischen Photon (Einphotonen-Absorption) ist auch eine Anregung mit mehreren Photonen geringerer Energie möglich. Die Summe der Energien der Einzelphotonen entspricht hierbei ungefähr einem Vielfachen des hochenergetischen Photons. Diese Art der Anregung der Farbstoffe wird als Mehrphotonen-Absorption bezeichnet (Lit.: Corle, Kino; "Confocal Scanning Optical Microscopy and Related Imaging Systems"; Academic Press 1996). Die Farbstoffemission wird durch diese Art der Anregung jedoch nicht beeinflußt, d.h. das Emissionsspektrum erfährt bei der Mehrphotonen-Absorption einen negativen Stokesshift, besitzt also eine geringere Wellenlänge im Vergleich zur Anregungsstrahlung. Die Trennung der Anregungs- von der Emissionsstrahlung erfolgt in der gleichen Art und Weise wie bei der Einphotonen-Absorption.

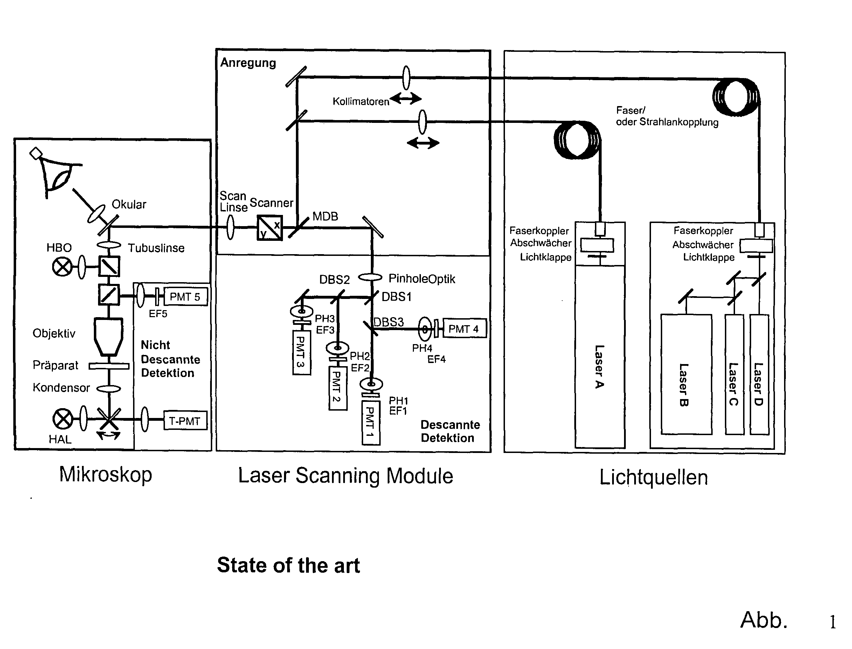

Der Stand der Technik soll im folgenden beispielhaft anhand eines konfokalen Laser-Scanning- Mikroskopes (LSM) erläutert werden (Abb. 1).

Ein LSM gliedert sich im wesentlichen in 4 Module: Lichtquelle, Scanmodul, Detektionseinheit und Mikroskop. Diese Module werden im folgenden näher beschrieben. Es wird zusätzlich auf DE19702753A1 verwiesen.
Zur spezifischen Anregung der verschiedenen Farbstoffe in einem Präparat werden in einem LSM Laser mit verschiedenen Wellenlängen eingesetzt. Die Wahl der Anregungswellenlänge richtet sich nach den Absorptionseigenschaften der zu untersuchenden Farbstoffe. Die Anregungsstrahlung wird im Lichtquellenmodul erzeugt. Zum Einsatz kommen hierbei verschiedene Laser (z.B. Gaslaser: Argon, Argon Krypton, Festkörperlaser: TiSa-Laser, Dioden). Weiterhin erfolgt im Lichtquellenmodul die Selektion der Wellenlängen und die Einstellung der Intensität der benötigten Anregungswellenlänge, z.B. durch den Einsatz eines akusto-optischen Kristalls. Anschließend gelangt die Laserstrahlung über eine Faser oder eine geeignete Spiegelanordnung in das Scanmodul.
Die in der Lichtquelle erzeugte Laserstrahlung wird mit Hilfe des Objektivs beugungsbegrenzt über die Scanner, die Scanoptik und die Tubuslinse in das Präparat fokussiert. Die Scanner rastern punktförmig die Probe in x-y-Richtung ab. Die Pixelverweilzeiten beim Scannen über die Probe liegen meist im Bereich von weniger als einer Mikrosekunde bis zu einigen Sekunden.
Bei einer konfokalen Detektion (descanned Detektion) des Fluoreszenzlichtes, gelangt das Licht, das aus der Fokusebene (Specimen) und aus den darüber- und darunterliegenden Ebenen emittiert wird, über die Scanner auf einen dichroitischen Strahlteiler (MDB). Dieser trennt das Fluoreszenzlicht vom Anregungslicht. Anschließend wird das Fluoreszenzlicht auf eine Blende (konfokale Blende / Pinhole) fokussiert, die sich genau in einer zur Fokusebene konjugierten Ebene befindet. Dadurch werden Fluoreszenzlichtanteile außerhalb des Fokus unterdrückt. Durch Variieren der Blendengröße kann die optische Auflösung des Mikroskops eingestellt werden. Hinter der Blende befindet sich ein weiterer dichroitischer Blockfilter (EF) der nochmals die Anregungsstrahlung unterdrückt. Nach Passieren des Blockfilters wird das Fluoreszenzlicht mittels eines Punktdetektors (PMT) gemessen.
Bei Verwendung einer Mehrphotonen-Absorption erfolgt die Anregung der Farbstofffluoreszenz in einem kleinen Volumen in dem die Anregungsintensität besonders hoch ist. Dieser Bereich ist nur unwesentlich größer als der detektierte Bereich bei Verwendung einer konfokalen Anordnung. Der Einsatz einer konfokalen Blende kann somit entfallen und die Detektion kann direkt nach dem Objektiv erfolgen (non descanned Detektion).

In einer weiteren Anordnung zur Detektion einer durch Mehrphotonenabsorption angeregten Farbstofffluoreszenz erfolgt weiterhin eine descanned Detektion, jedoch wird diesmal die Pupille des Objektives in die Detektionseinheit abgebildet (nichtkonfokal descanned Detektion).

Von einem dreidimensional ausgeleuchteten Bild wird durch beide Detektionsanordnungen in Verbindung mit der entsprechenden Einphotonen bzw. Mehrphotonen-Absorption nur die Ebene (optischer Schnitt) wiedergegeben, die sich in der Fokusebene des Objektivs befindet. Durch die Aufzeichnung mehrerer optische Schnitte in der x-y Ebene in verschiedenen Tiefen z der Probe kann anschließend rechnergestützt ein dreidimensionales Bild der Probe generiert werden.
Das LSM ist somit zur Untersuchung von dicken Präparaten geeignet. Die Anregungswellenlängen werden durch den verwendeten Farbstoff mit seinen spezifischen Absorptionseigenschaften bestimmt. Auf die Emissionseigenschaften des Farbstoffes abgestimmte dichroitische Filter stellen sicher, daß nur das vom jeweiligen Farbstoff ausgesendete Fluoreszenzlicht vom Punktdetektor gemessen wird.

In biomedizinischen Applikationen werden zur Zeit mehrere verschiedene Zellregionen mit verschiedenen Farbstoffen gleichzeitig markiert (Multifluoreszenz). Die einzelnen Farbstoffe können mit den Stand der Technik entweder aufgrund verschiedener Absorptionseigenschaften oder Emissionseigenschaften (Spektren) getrennt nachgewiesen werden.
Zum getrennten Nachweis erfolgt eine zusätzliche Aufspaltung des Fluoreszenzlichts von mehreren Farbstoffen mit den Nebenstrahlteilern (DBS) und eine getrennte Detektion der einzelnen Farbstoffemissionen in verschiedenen Punktdetektoren (PMT 1-4).

Durchflußzytometer dienen der Untersuchung und der Klassifikation von Zellen und anderen Partikeln. Die Zellen befinden sich hierzu in einer Flüssigkeit gelöst und werden durch eine Kapillare gepumpt. Zur Untersuchung der Zellen wird ein Laserstrahl von der Seite in die Kapillare fokussiert. Die Zellen sind mit verschiedenen Farbstoffen oder fluoreszierenden Biomolekülen gefärbt. Gemessen wird das angeregte Fluoreszenzlicht und das rückgestreute Anregungslicht. Die Trennung des Fluoreszenzsignals der Probe von dem Anregungslicht erfolgt mittels dichroitischen Strahlteilern (MDB siehe Abb. 1).
Aus dem rückgestreuten Signal kann die Größe der Zellen bestimmt werden. Mit Hilfe der Spektraleigenschaften der Fluoreszenz einzelner Zellen können verschiedene Zellen separiert/sortiert oder getrennt gezählt werden. Die Sortierung der Zellen erfolgt mit einem elektrostatischen Feld in verschiedene Kapillaren. Das Ergebnis, d.h. z.B. die Anzahl der Zellen mit Farbstoff A im Vergleich zu Zellen mit Farbstoff B wird häufig in Histogrammen dargestellt.
Die Durchflußgeschwindigkeit beträgt typischerweise einige 10-100 cm/s. Deshalb wird eine hochempfindliche Detektion benötigt. Zur Einschränkung des Detektionsvolumens erfolgt nach dem Stand der Technik eine konfokale Detektion.

Statt eines Punktscanners werden nach dem Stand der Technik auch so genannte Linienscanner verwendet (Lit.: Corle, Kino; "Confocal Scanning Optical Microscopy and Related Imaging Systems"; Academic Press 1996). Der prinzipielle Aufbau entspricht im wesentlichen dem eines LSM nach Abb. 1. Jedoch wird statt eines Punktfokus eine Linie in die Probe (3) abgebildet und die zu untersuchende Probe nur noch in einer Richtung (x oder y) gescannt. Durch das Scannen einer Linie anstatt eines Punktes kann die Bildaufnahmerate erheblich vergrößert werden. Somit kann dieses Scanverfahren zur Beobachtung von schnell ablaufenden Prozessen in Echtzeit (Echtzeitmikroskopie) verwendet werden.

In einer weiteren Anordnung zur Echtzeitmikroskopie nach dem Stand der Technik wird das komplette zu untersuchende Feld mittels einer aufgeweiteten Lichtquelle beleuchtet. Jedoch werden nur spezielle Punktmuster des gesamten zu scannenden Feldes durch eine sich schnell drehende Scheibe freigegeben. Diese Verfahren werden in der Literatur meist als Nipkow-Disk Verfahren bezeichnet (Lit.: Corle, Kino; "Confocal Scanning Optical Microscopy and Related Imaging Systems"; Academic Press 1996).

Anordnungen zum Screenen von Farbstoffen wie z.B. in so genannten Chipreadem ähneln in ihrem optischen Aufbau einem Laser Scanning Mikroskop. Sie scannen jedoch ein deutlich größeres Bildfeld zur Untersuchung der makroskopischen Proben, beispielsweise Screenen von Wirkstoffen auf einem Biochip. Die Kantenlänge der Scanfelder betragen hierbei einige 10 mm. Diese Scanfelder können z.B. durch eine Vergrößerung der Scanwinkel der Galvoscanner, durch eine Anordnung der Probe in einem Zwischenbild der Mikroskopanordnung oder durch eine spezielle Objektivanordnung (Makroobjektiv), die das Zwischenbild vergrößert auf die Probe abbildet, erzielt werden.

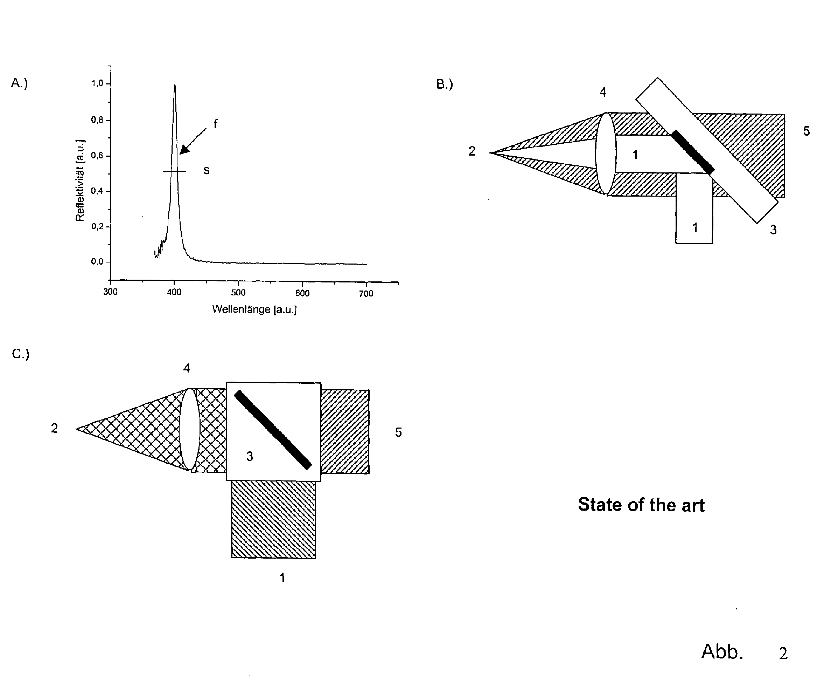

Die Trennung des Anregungslichtes vom von der Probe emittierten Licht erfolgt nach dem Stand der Technik durch spektrale Trennung unter Ausnutzung des Stokesshiftes, durch eine Einschränkung der numerischen Apertur der zur Probenbeleuchtung/detektion verwendeten Optiken oder durch eine Aufteilung in verschiedene Polarisationsrichtungen.
Zur spektralen Trennung des Anregungslichts vom von der Probe emittierten Licht werden spezielle dichroitische Strahlteiler verwendet. Diese sind meist, wie in Abb. 2a gezeigt, so ausgelegt, dass sie möglichst effizient das Anregungslicht reflektieren und das von der Probe emittierte Licht möglichst effizient transmittieren. Dargestellt ist der Reflexionsgrad (Reflektivität) in Abhängigkeit von der Wellenlänge. Bei Verwendung von polarisiertem Anregungslicht beträgt die minimale spektrale Bandbreite (s) des reflektierten Wellenlängenbereiches ca. 10 nm, wobei die Flankensteilheit (f) meist >5 nm ist. Somit kann nach dem Stand der Technik mit einem dichroitischen Strahlteiler bei Verwendung einer Anregungswellenlänge, das von der Probe emittierte Licht, effizient getrennt werden. Jedoch verschlechtert sich die Effizienz bei simultaner Anregung mehrerer Farbstoffe mit mehreren Wellenlängen (Multifluoreszenzmikroskopie), da es meist zu einer spektralen Überlappung des Anregungslichtes und des emittierten Lichtes kommt. Weiterhin muß bei Verwendung verschiedener Farbstoffe mit verschiedenen Absorptionseigenschaften jedesmal ein spezieller Strahlteiler kreiert werden. In einem Weitfeldmikroskop erfolgt meist eine breitbandige Anregung der Probe mit Licht einer Weißlichtquelle, wobei sich teilweise die Anregungs- und die emittierte Strahlung spektral überlagern. Somit kommt es bei Verwendung von dichroitischen Strahlteilern nach dem Stand der Technik zu einer schlechten Effizienz der Trennung von Anregungslicht und emittierten Licht.

Die Trennung des Anregungslichtes vom emittierten Licht durch Einschränkung der numerischen Apertur der Probenbeleuchtungsoptik (4 in Abb. 2b) kann beispielsweise durch eine Beleuchtung der Probe mit eingeschränkter Apertur erfolgen, so dass nur die achsnahen Strahlen (1) in Richtung zur Probe (2) gelangen. Da die Emission in alle Raumrichtungen erfolgt, kann im verbleibenden Aperturbereich dieses Licht der Probe (2) aufgesammelt werden. Die Trennung des Anregungslichts vom emittierten Licht erfolgt anschließend mit einem teilweise voll verspiegelten (schwarzer Bereich) Planplatte (3). Die Detektion des von der Probe emittierten Lichts erfolgt in Strahlrichtung (5). Nachteilig bei den aus dem Stand der Technik (z.B. EP 1353209) bekannten Verfahren zur Teilung der numerischen Apertur ist, dass durch die Einschränkung der Apertur zum einen die Effizienz der Detektion und zum anderen die optische Auflösung der Anordnung verschlechtert werden. Beide Parameter sind hierbei miteinander verkoppelt. Will man beispielsweise eine hohe Effizienz der Trennung erzielen, so verschlechtert sich die optische Auflösung.

Nachteilig bei allen bisher erläuterten Verfahren nach dem Stand der Technik ist, dass die Trennung des Anregungslichtes vom von der Probe emittierten Licht wellenlängenabhängig, d.h. nicht flexibel einstellbar, oder mit eingeschränkter Effizienz typischerweise 70% bis 90% - abhängig von den geforderten Spekraleigenschaften und der Anzahl der Beleuchtungslinien - erfolgt.

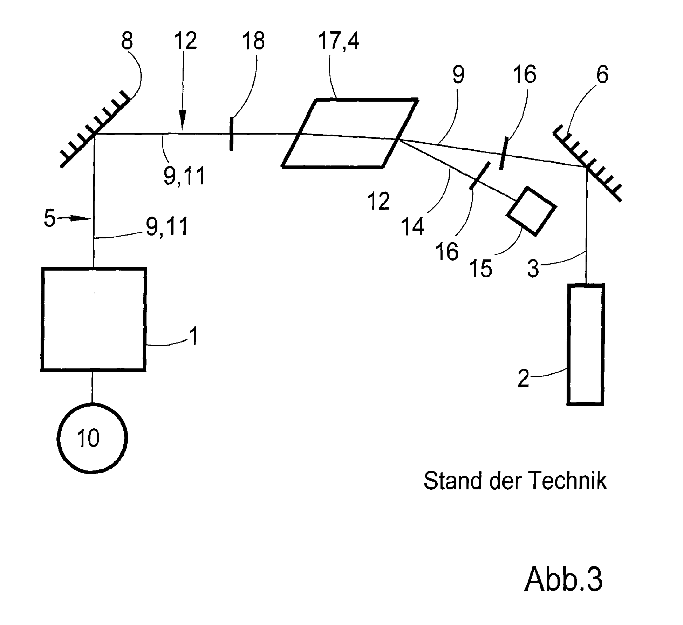

In US 6510001, US 6654165, US 2003/0133189 und DE19936573 wurden optische Vorrichtungen beschrieben, bei der eine spektral flexible ohne Bewegung von mechanischen Komponenten einstellbare Trennung des Detektionslichtes vom Anregungslicht erfolgen kann (Abb. 3). In dieser Anordnung wird der MDB durch einen akusto optischen Modulator AOTF (17,4) ersetzt. Dieser transmittiert das aus Richtung der Probe kommende Beobachtungslicht (5, 12) so dass es in Richtung Detektor (15) gelangt. Das Anregungslicht (3, 9) läuft unter einem Winkel relativ zu (12) und wird durch den AOTF in den gemeinsamen Probenstrahlengang (5) gebeugt. Die Frequenz des AOTF muss hierbei so eingestellt werden, dass der Anregungsstrahlengang und der Detektionsstrahlengang kolinear verlaufen. Wird dies nicht gewährleistet dann kommt es zu einer Reduzierung der Detektionseffizienz insbesondere bei einer konfokalen Detektion bzw. zu Bildartefakten, da die Anregungsspots bei Verwendung verschiedener Wellenlängen nicht übereinander liegen. Spezielle Kompensationsvorrichtungen sind in DE 10137155 beschrieben. Nachteilig bei diesen Anordnungen ist, dass einen Vielzahl von aufeinander abgestimmten optischen Komponenten nötig sind, die die Gesamttransmission verschlechtern.

In DE10257237 ist ein Verfahren und optische Vorrichtungen beschrieben mit der eine achromatische Trennung des Detektionslichtes vom Anregungslicht in einem Weitfeld- bzw. in einem linienscannenden Mikroskop erfolgen kann. Hierbei wird die in einer Probe angeregte und/ oder rückgestreute und/ oder von der Probe reflektierte Lichtstrahlung separiert, indem die Probenbeleuchtung in eine und/oder in die Nähe einer Pupillenebene des Strahlenganges zwischen Probenebene und Erfassungssebene fokussiert wird und in dieser Ebene Mittel zur räumlichen Trennung des Beleuchtungslichtes vom Detektionslicht vorgesehen sind.

DE10241472 (Abb. 4) beschreibt ein Verfahren und Anordnung zur einstellbaren Veränderung von Beleuchtungslicht und/oder Probenlicht bezüglich seiner spektralen Zusammensetzung und/oder Intensität, wobei mit ersten Polarisationsmitteln (P1, P3) eine räumliche Trennung in Strahlungsanteile unterschiedlicher Polarisation erfolgt, mit ersten Dispersionsmittel (D1) eine spektrale räumliche Aufspaltung mindestens eines Strahlungsanteils vorgenommen wird, die spektral räumlich aufgespalteten Anteile auf ein Element S abgebildet werden (L1), der Polarisationszustand mindestens eines Teils des spektral räumlich aufgespaltenen Strahlungsanteils durch die Wirkung des Elementes S verändert wird und über zweite Abbildungsmittel (L2) und Polarisationsmittel (P2, P4) eine räumlichen Trennung und/oder Zusammenführung von Strahlungsanteilen unterschiedlicher Polarisation vorgenommen wird, wobei vorteilhaft eine räumliche Zusammenführung von bezüglich ihres Polarisationszustandes veränderten und nicht veränderten Strahlungsanteilen durch zweite Dispersionsmittel (D2) erfolgt. Nachteilig bei dieser Anordnung sind die Anzahl der optischen Komponenten zur spektralen räumlichen Aufspaltung durch die die Effizienz der Anordnung reduziert werden. Weiterhin erfolgt die Manipulation des Polarisationszustandes der Spektralanteile am Element S mit einem linearen Array. Dieses Array erfordert je nach vorgegebener spektrale Auflösung einen hohen Aufwand bzgl. der elektronischen Beschaltung. Zusätzlich ist die Geschwindigkeit bei Verwendung eines Spatial Light Modulators eingeschränkt und beträgt einige 10 ms. Im Stand der Technik DE10241472 (Abb. 4) sind zwischen je 2 Strahlteilerwürfeln (P2 und P1 bzw. P4 und P3) 2 dispersive Elemente (z.B. Prismen oder Gitter) D1 und D2 angeordnet, die die Lichtstrahlung räumlich spektral entlang der Y-Koordinate aufspalten bzw. wieder zusammenführen. Die Optiken L1 und L2 befinden sich im Abstand von jeweils ihrer Brennweite f, die auch für die Optiken unterschiedlich sein kann, zwischen den dispersiven Elementen D 1 bzw. D2 und einem Element zur Drehung der Polarisation, beispielsweise einem Spatial Light Modulator (SLM) S. Die Optiken L1 und L2 gemeinsam mit den dispersiven Elementen D1 und D2 dienen der Erzeugung einer spektralen Fourierebene am Ort des SLM S. In dieser Ebene sind die spektralen Anteile des aus Richtung 2 oder Richtung 1 kommenden Lichtes räumlich entlang der y-Koordinate separiert. Das SLM (z.B. SLM640 der Firma Jenoptik, Germany) besteht aus einer Reihe von Streifen (beim SLM 640 sind es 640 Streifen), die einzeln angesteuert werden können. Je nach Ansteuerung des jeweiligen Pixels kann die Polarisationsrichtung des hindurchtretenden Lichtes variiert werden. SLM werden nach dem Stand der Technik in so genannten Pulse Shapern eingesetzt (Lit.:Stobrawa et al., Apl. Phy.B72, 627-630(2002)). Hierbei erfolgt durch die Wirkung des SLM in Kombination mit dispersiven Elementen eine Phasenverzögerung und / oder eine Amplitudenänderung der Spektralanteile der Lichtquelle. Die Lichtquelle muss hierzu im Gegensatz zu den nachfolgend beschriebenen Anordnungen linear polarisiert sein, da sonst ein Energieverlust auftritt. Anstatt eines SLM kann beispielsweise auch eine Vielzahl einstellbarer lambda halbe Platten eingesetzt werden, die in der Fourierebene angeordnet werden.

Erfindungsgemäß werden Verfahren und Anordnungen beschrieben mit denen besonders vorteilhaft das Anregungslicht von der in der Probe angeregten und/oder rückgestreuten Lichtstrahlung (z.B. Fluoreszenz / Lumineszenz) mit hoher Effizienz getrennt werden kann, wobei die Anzahl der optischen Komponenten im Strahlengang ggb. DE10241472 reduziert ist, so dass sich eine höhere Effizienz der optischen Anordnung ergibt. Die Trennung ist hierbei weiterhin spektral flexibel ohne Bewegung von mechanischen Komponenten einstellbar und ist deshalb insbesondere für den Einsatz in der Multifluoreszenzmikroskopie, d.h. zur simultanen Anregung verschiedener Farbstoffe besonders geeignet. Die optische Auflösung wird durch die erfindungsgemäßen Anordnungen gegenüber Anordnungen zur Trennung des Anregungs- vom Detektionsstrahlengang nach dem Stand der Technik nicht verschlechtert.
Zusätzlich ist die Unterdrückung des Störlichtes um mindestens eine Größenordnung verbessert. Somit ist eine schnelle Umschaltung zwischen mehreren Anregungswellenlängen bzw. spektralen Detektionswellenlängenbereichen - so genanntes Multitracking, wie in EP977069 A2 beschrieben, besonderes einfach zu realisieren.
Weiterhin ist es möglich, das von der Probe in Richtung Detektor gestreute Licht von dem auf direktem Wege reflektierten Licht zu separieren und getrennt zu messen. Zusätzlich kann eine Messung der Polarisationsrichtung des von der Probe kommenden Lichtes erfolgen.
Ein weiterer Vorteil ist, dass Laserleistungsschwankungen, verursacht durch instabile Kopplung in eine Glasfaser, durch Regelung verhindert werden können, so dass am Ort der Probe die Leistung konstant gehalten werden kann.

Weiterhin kann die Beleuchtungsverteilung am Ort der Probenwechselwirkung manipuliert werden. Dadurch ist es möglich, so genannte Regions of Interest (ROI) in Echtzeit zu scannen. Zusätzlich können die aus der Weitfeldmikroskopie bekannten Beleuchtungsverfahren, wie z.B. eine schiefe Beleuchtung realisiert werden.
Weiterhin kann der AOTF zur Selektion und zum schnellen Schalten der Anregungswellenlängen (Abb. 1, Abschwächer) entfallen.

Die erfindungsgemäße Lösung ist in bildgebenden wie in analytischen Mikroskopiersystemen einsetzbar. Die Mikroskopsysteme sind bildgebende Systeme wie Laser-Scanning-Mikroskope zur dreidimensionalen Untersuchung von biologischen Präparaten mit einer optischen Auflösung bis zu 200 nm, Scanning-Nahfeld-Mikroskope zur hochaufgelösten Untersuchung von Oberflächen mit einer Auflösung von bis zu 10 nm. Fluoreszenzkorrelations-Mikroskope zur quantitativen Bestimmung von Molekülkonzentrationen und zur Vermessung von Molekül-Diffussionen. Weiterhin sind auf Fluoreszenzdetektion basierende Verfahren zum Screenen von Farbstoffen und Verfahren zur Durchflußzytometrie eingeschlossen.
In all den o.g. Systemen werden Fluoreszenzfarbstoffe zur spezifischen Markierung der Präparate eingesetzt. Die o.g. Aufgabe wird durch Verfahren und Anordnungen gemäß den unabhängigen Patentansprüchen gelöst. Bevorzugte Weiterbildungen sind Gegenstand der abhängigen Ansprüche.
Durch die erfindungsgemäßen Verfahren können die Anzahl der simultan einsetzbaren Farbstoffsignaturen, d.h. die Anzahl der simultan untersuchbaren Eigenschaften beispielsweise von Zellen erhöht werden. Bei sich stark überlappenden bzw. nahe beieinander liegenden Spektralsignaturen der einzelnen Farbstoffe muß nach dem Stand der Technik der detektierte Wellenlängenbereich oder die numerische Apertur zur getrennten Detektion der Fluoreszenzsignale einzelner Farbstoffe eingeschränkt werden. Dadurch verringert sich die Empfindlichkeit der Detektion, d.h. es kommt zu einem erhöhten Rauschen der Detektoren, da höhere Verstärkungen genutzt werden müssen. Dies wird durch die erfindungsgemäßen Verfahren und Anordnungen verhindert.

### Beschreibung der Erfindung

Im folgenden werden verschiedene Anordnungen näher erläutert, mit denen sich die in der Probe angeregte und/oder rückgestreute Lichtstrahlung (im folgenden Detektionslicht) besonders effizient vom Anregungslicht trennen läßt. Die Anordnungen eignen sich somit insbesondere zum schnellen Multitracking mit einer spektral angepassten flexiblen Trennung der Anregungsstrahlung vom Detektionslicht. Von der Probe emittierte Lichtstrahlung ist im folgenden Kontext Licht, welches vorzugsweise in einen großen Raumwinkel von der Probe abgestrahlt wird. Diese Lichtstrahlung ist meist nicht polarisiert (unpolarisiert) bzw. der Polarisationsgrad unterscheidet sich von der Polarisation des Anregungslichtes. Dies sind insbesondere in der Probe angeregtes Fluoreszenz-, Lumineszenzlicht und rückgestreutes Licht.

### 1. Wirkprinzip der Anordnung zur variablen Trennung des Anregungslichts vom Detektionslicht

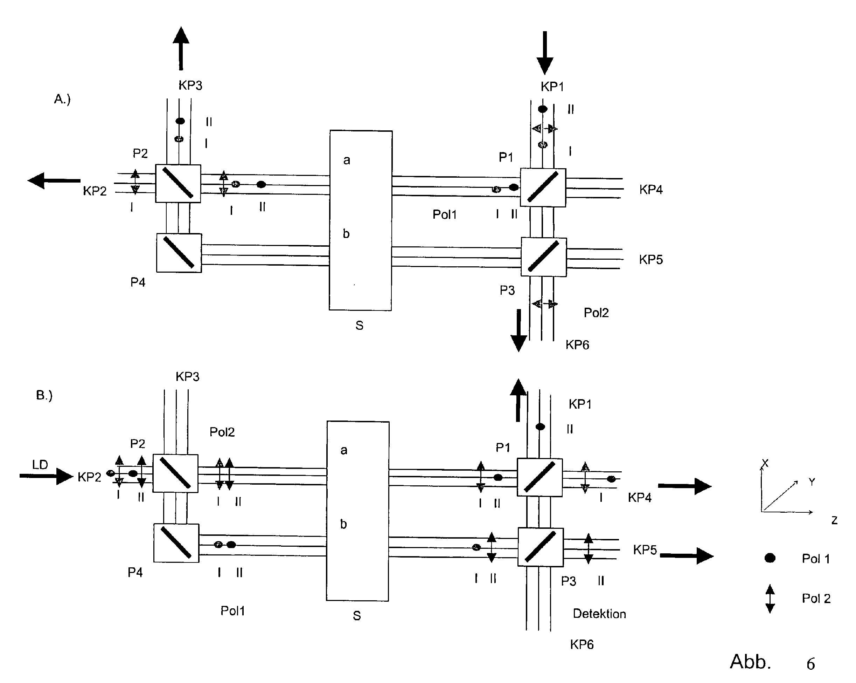

Abb. 6 beschreibt eine Anordnung zur variablen Trennung des Anregungs- vom Detektionslicht in Teilbild A) in seiner Wirkung im Anregungsstrahlengang und in Teilbild B) im Detektionsstrahlengang. Abb. 6b.) zeigt schematisch den Aufbau der Anordnung zur Trennung des Anregungslichts vom Detektionslicht für den Detektionsstrahlengang und Abb. 6a.) für den Anregungstrahlengang. Die Anordnung besteht im wesentlichen aus mindestens 3 Polarisationsstrahlteilerwürfeln P1 bis P3. P4 kann ein weiterer Polarisationsstrahlteilerwürfel oder ein Spiegel sein. Als Polarisationsstrahlteilerwürfel können beispielsweise Glan-Laser-Polarisationsteiler, doppelbrechende Materialien oder speziell mikrostrukturierte Strahlteiler (z.B. MicroWires der Firma Moxtek, Inc.; Orem USA) eingesetzt werden. Zwischen den Polarisationsteilerwürfeln befindet sich ein akusto optisches Element.

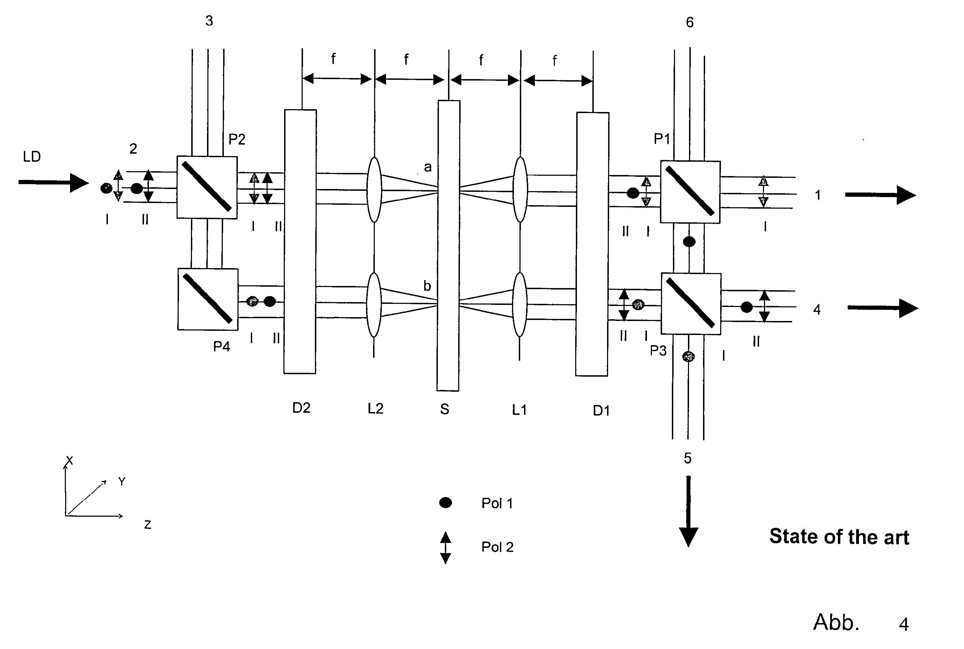

Das Wirkprinzip wird im folgenden anhand von Abb. 6B für den Detektionsstrahlengang erläutert. Probenlicht. LD, das in Pfeilrichtung an Koppelport KP2 eingekoppelt wird, (2) wird am Polteiler P2 in zwei senkrecht zueinander stehende reflektierte Polarisationsanteile Pol1 (in Zeichnung Kreise, Polrichtung in Blickrichtung) und durchgehende Polarisationsanteile Pol2 (in Zeichnung Pfeile, Polrichtung in Pfeilrichtung) zerlegt. Die grauen (I) und die schwarzen (II) Symbole sollen Licht verschiedener Wellenlänge (z.B. schwarz (II) Fluoreszenz (□2) und grau (I) gestreutes Anregungslicht (□1)) darstellen. Pol1 der verschiedenen Wellenlängen (□1, □2) gelangt von P2 über P4 und Pol2 gelangt von P2 direkt auf verschiedene Regionen eines akusto optischen durchstimmbaren Filters (AOTF) S, und zwar Pol 1 auf Region b und Pol 2 auf Region a. Der AOTF dreht beispielsweise die Polarisation für die Lichtstrahlung der Wellenlänge □ 2 (schwarz (II) gezeichnet) um beispielsweise genau 90° (Abb. 4). Im folgenden gelangt das Licht auf Polteiler P 1 und P3, wobei die grauen (I) und die schwarzen (II) Anteile (d.h. in diesem Beispiel die Fluoreszenzs- und die Anregungsstrahlung) in beiden Armen P2-P1 bzw. P4-P2 senkrecht zueinander polarisiert sind (Abb. 4). Das Anregungslicht (grauen (I) Anteile) tritt somit durch die Koppelports KP 1 und KP5 aus. Beide Polarisationsrichtungen des Fluoreszenzlichts (schwarzen (II) Anteile) treten gemeinsam durch den Koppelport KP4 aus.

Das Wirkprinzip im Anregungsstrahlengang ergibt sich entsprechend und wird anhand von Abb. 6A erläutert. Anregungslicht, das durch den Eingang KP1 hindurchtritt (Pfeil) wird an P1 in KP2 senkrecht zueinander stehenden Polarisationsanteile Pol1 und Pol2 zerlegt. Die grauen (I) und die schwarzen (II) Symbole sollen wiederum Licht verschiedener Wellenlänge (z.B. schwarz Anregungslicht der Wellenlänge □2 und rot Anregungslicht der Wellenlänge □1) darstellen. Pol2 gelangt direkt auf den Ausgang KP6. Pol1 der verschiedenen Wellenlängen (□1, □2) gelangen von P1 auf den AOTF S. Der AOTF dreht beispielsweise die Polarisation für die Lichtstrahlung □2 fallende (schwarz II gezeichnet) um beispielsweise genau 90°. Für die Wellenlänge □1 dreht der AOTF die Polarisation um einen Winkel von beispielsweise ungleich als 90° (vorzugsweise im Bereich von 0° - 180°). Im folgenden gelangt das Licht auf P2. P2 separiert die Anteile je nach Polarisation in den Ausgang KP3 bzw. in den Ausgang KP2. In dem o.g. Beispiel wurde die Polarisation für die Wellenlänge □2 durch den AOTF genau um 90° verdreht. Deshalb wird alles Licht dieser Wellenlänge in den Ausgang KP3 durch P2 geleitet. Im Gegensatz dazu wurde die Polarisation für die Wellenlänge □ 1 nur um einen Winkel von ungleich 90° gedreht. Deshalb wird die Lichtleistung in die beiden Ausgänge KP2 und KP3 aufgeteilt. Das Teilungsverhältnis ergibt sich aus dem eingestellten Drehwinkel der Polarisation am AOTF. Eine Drehung der Polarisation um Winkel ungleich von 90 Grad im Anregungsstrahlengang ist zur Abschwächung des Anregungslichts geeignet, da das Verhältnis der Leistungen in den Koppelports KP2 und KP3 entsprechend der Beziehung: P₂/P₃=tan (Drehwinkel) stufenlos eingestellt werden kann.

Mit Hilfe der Anordnung kann somit Lichtstrahlung, die durch den Eingang KP1 eintritt unabhängig von dem Polarisationsgrads aufgrund ihrer verschiedenen spektralen Zusammensetzung in die verschiedenen Ausgänge KP2, KP3 und KP6 räumlich separiert und eingestellt werden und somit getrennt optisch weiterverarbeitet werden. Gleichzeitig kann Lichtstrahlung, die durch den Eingang KP2 eintritt unabhängig von dem Polarisationszustand aufgrund ihrer verschiedenen spektralen Zusammensetzung in die verschiedenen Ausgänge KP1, KP5 und KP4 räumlich separiert werden und somit getrennt optisch weiterverarbeitet werden. Die Anordnung eignet sich somit als Hauptfarbteile zur Trennung des Anregung- vom Detektionsstrahlengang.

Eine Drehung der Polarisation um Winkel ungleich von 90 Grad im Detektionsstrahlengang zur Fluoreszenzmessung ist möglich, aber weniger zweckmäßig, da dann Anteile des Fluoreszenzlichts auch in den Koppelports KP1 und KP5 gelangen und somit nicht mit einem Detektor detektiert werden.

Als polarisationsdrehende Elemente können doppelbrechende Medien mit fest vorgegebener oder mit flexibler Polarisationsdrehung eingesetzt werden. Elemente mit flexibler Einstellmöglichkeit sind akustooptische Elemente wie ein AOTF oder elektrooptische Elemente wie eine Pockelszelle. Elemente mit fest vorgegebener Polarisationsdrehung sind z.B. Verzögerungsplatten wie lambda/4 Platten.

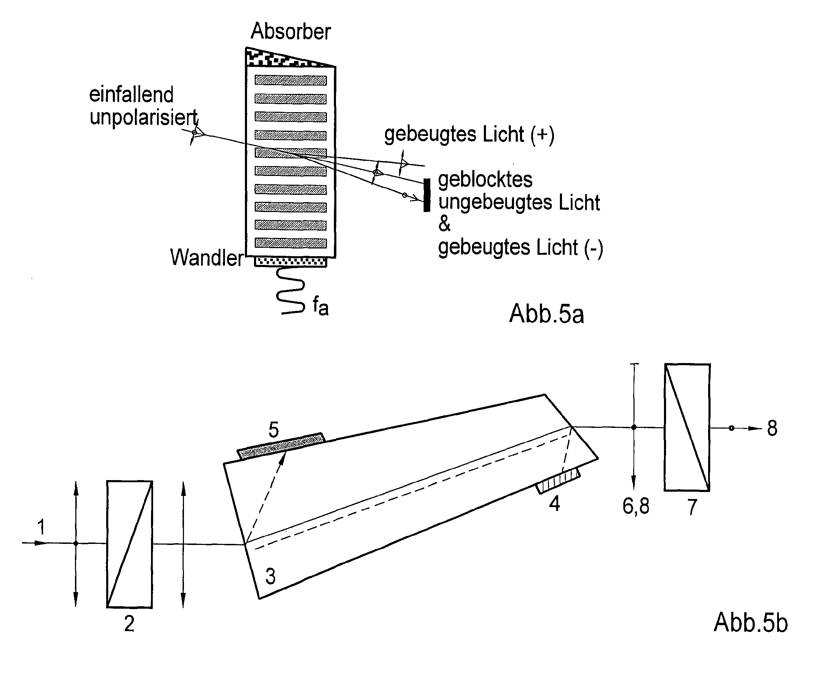

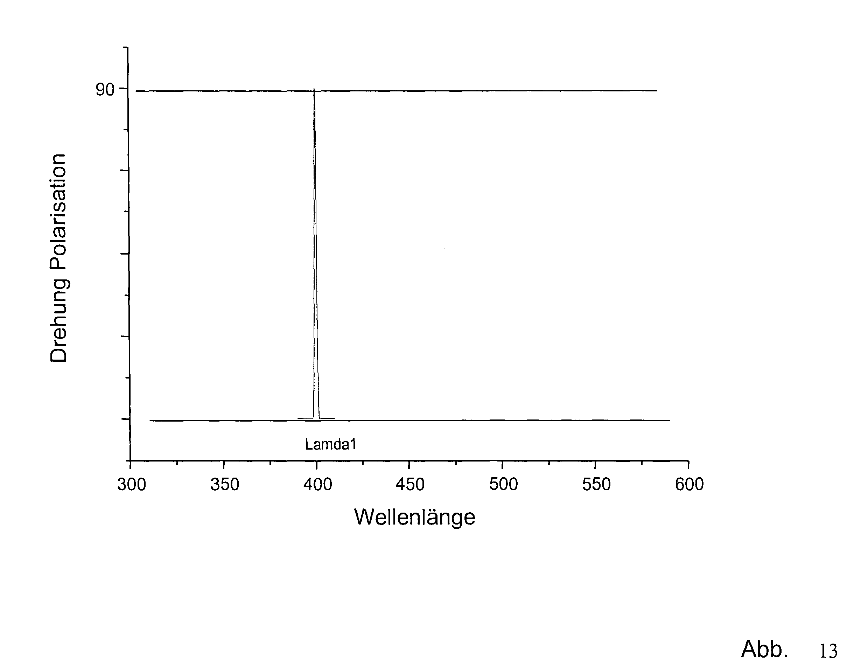

Als AOTF S sind AOTF mit kolinearem Verlauf von akustischer und optischer Welle besonders vorteilhaft. Diese können im Gegensatz zu nichtkolinearen AOTF die Polarisation drehen ohne die Richtung der optischen Welle zu beeinflussen. Bei einem nichtkolinearen AOTF (Abb. 5a) steht die akustische Welle (zwischen Kopplern 3 und 4) unter einem Winkel zur einfallenden Strahlung (1). Nach dem AOTF entstehen an der akustischen Welle gebeugte Lichtanteile (2a) und ungebeugte Lichtanteile (2b). Bei dem erfindungsgemäß eingesetzten kolinearen AOTF (Abb. 5b) wird zur Drehung der Polarisation einer bestimmten Wellenlänge eine akustische Welle mit einer bestimmten Frequenz zwischen den Kopplern (Transducer 3, 4) angelegt. Die Amplitude der akustischen Welle bestimmt den Grad der Polarisationsdrehung der optischen Welle am Ausgang (2). Mit der Überlagerung von akustischen Wellen verschiedener Frequenz und Amplitude können simultan die Polarisationszustände verschiedener Wellenlängen variiert werden, so dass gleichzeitig mehrere Wellenlängenbereiche optisch geschalten werden können. Für weitere Details zur Funktionsweise von kolinearen AOTF wird auf die Literatur: Design and Fabrication of acousto-optic devices, ed. Goutzoulis, Pape, Dekker Inc. 1994, USA verwiesen. Abb. 13 zeigt die Wirkung des AOTF bei einer akustische Welle mit Frequenz fl und Amplitude A1, die beispielsweise eine Drehung der Polarisation des Eingangslichtes bei der Wellenlänge lamda1 um 90 bewirkt. Die Polarisationsrichtung des Lichtes bei anderen Wellenlängen wird nicht geändert.

Abb. 7 zeigt die Anordnung aus Abb. 6 in der Y-Z Ebene. Durch die optischen Elemente werden vorzugsweise keine Ablenkungen des Anregungs- und oder Detektionslichtes vorgenommen.
Abb. 8 zeigt eine weitere vorteilhafte Ausbildung des MDB, wobei doppelbrechende Medien M1, M2 als Polarisationsteiler zum Einsatz kommen. Das können doppelbrechende Kristalle wie Kalkspat sein. Die Funktion und die Beschreibung der Ports ist analog der Abb. 6. Lediglich die Polarisationsteiler sind ersetzt durch doppelbrechende Medien.
Dies hat den Vorteil, dass die Polarisationsteilung über große spektrale Bandbreiten mit hoher Effizienz erfolgen kann. Weiterhin können die Bereiche a. und b. besonders einfach sehr nahe beieinander liegend angeordnet werden.
KP sind die bereits beschriebenen Koppelports mit entsprechender Bezeichnung.

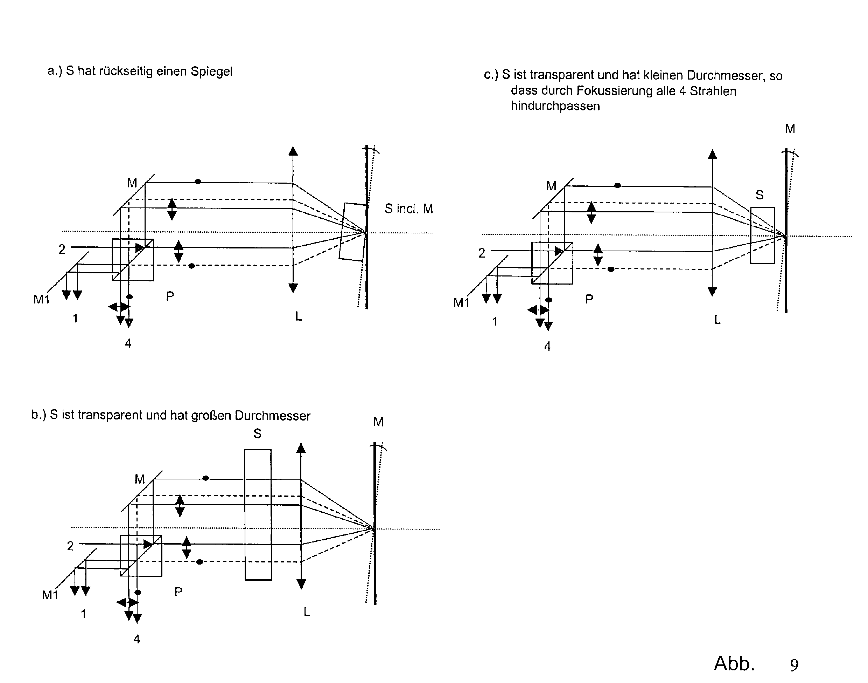

Abb. 9 zeigt eine weitere vorteilhafte Ausbildung des MDB. Hierbei wird die Anzahl der optischen Komponenten minimiert. Die Anordnung verwendet ein einziges polarisationsteilendes Element P. Das Licht aus Port 2 (z.B. Probe) wird an P in seine Polarisationsanteile aufgespalten und gelangt über eine Linse L auf in den AOTF (S), wobei S im Brennpunkt der Linse L angeordnet ist. Der AOTF S wird zweimal durchlaufen und somit in Reflexion betrieben, wobei die rückreflektierende Fläche unter einem kleinen Winkel angeordnet wird. Die reflektierende Fläche kann vorteilhaft auch eine Fläche des AOTF Kristalls sein. Das Licht gelangt durch die Verkippung von S oder des Spiegels unter einem anderen Winkel auf die Linse L und es bilden sich parallel zum Eingangsstrahl versetzte Strahlen, die in Richtung P laufen. Wird die Polarisation am AOTF S nicht geändert, gelangen beide Strahlen an P aus dem Port 4 (z.B. Detektor). Wird jedoch die Polarisation am AOTF geändert, dann gelangen Polarisationsanteile in Richtung Port 1 (z.B: Lichtquelle). Da der Parallelversatz der beiden Polarisationsanteile an den Ports 1 und 4 nur äußerst gering ist, können beide Anteile z.B. an 4 auf einen gemeinsamen Detektor geführt werden. Der Parallelversatz zwischen Ports 1 und 2 wird so gewählt, dass eine räumliche Separation der beiden Strahlen möglich ist (z.B. durch M1 in der Abb.).

### 2. Laserscanning Mikroskop

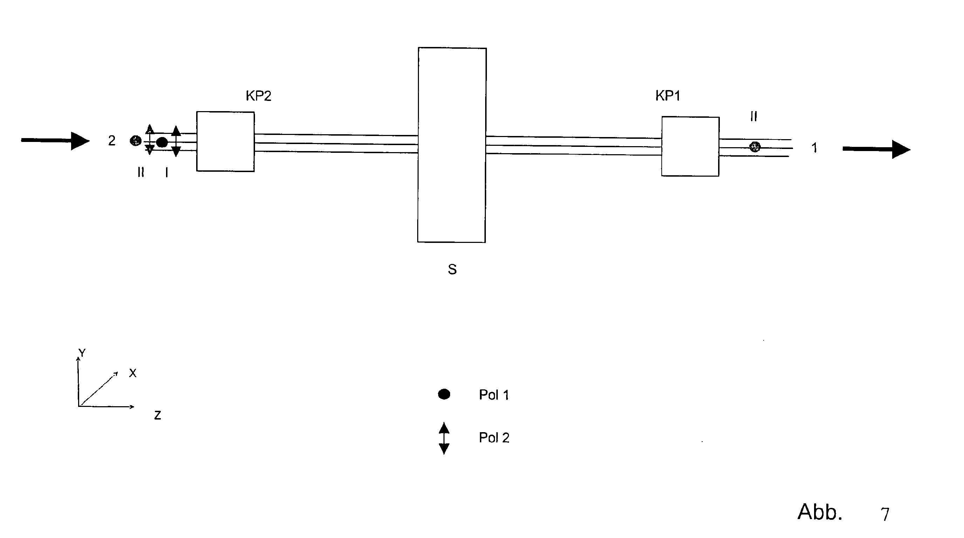

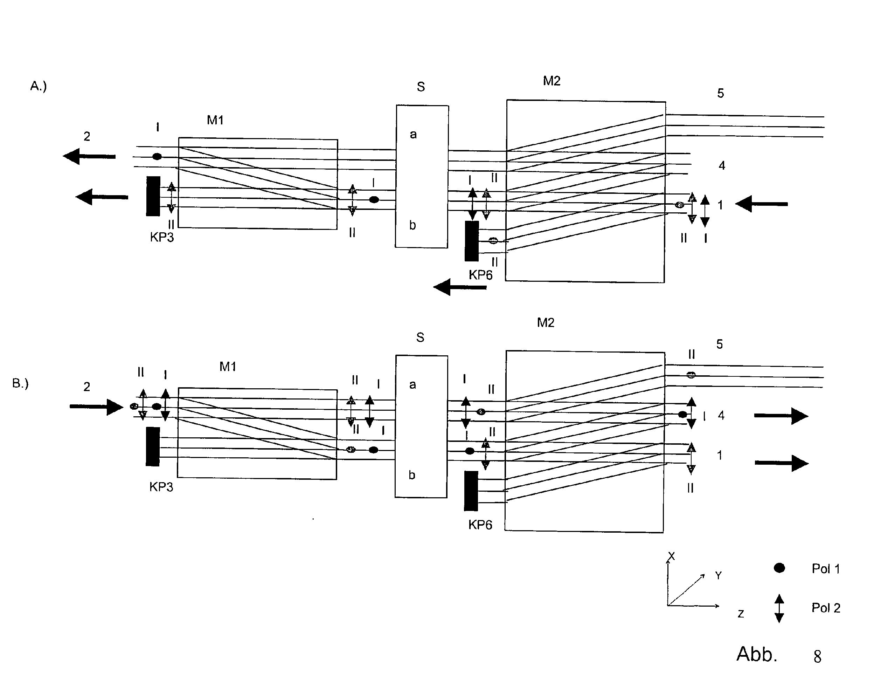

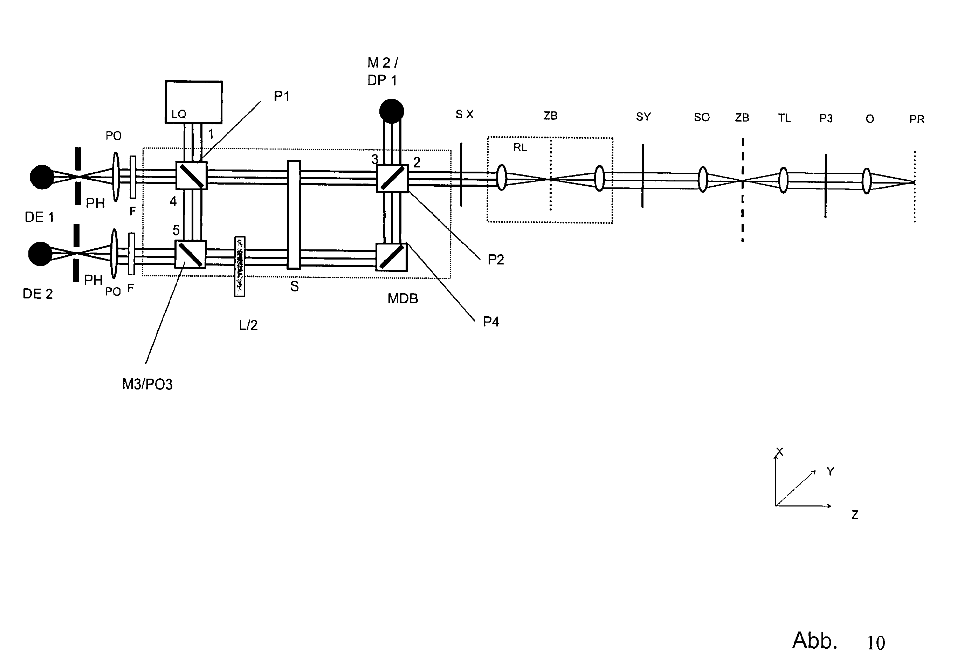

Abb. 10 zeigt schematisch die erfindungsgemäße Anordnung für ein Laserscanning Mikroskop (LSM) in der xz-Ebene. Das unter 1 (anhand Fig. 6-9) beschriebene Wirkprinzip kann analog in einem Mikroskop zur flexiblen Trennung der Fluoreszenz- von der Anregungsstrahlung eingesetzt werden. Bei einem LSM wird die Probe mit einem Punktfokus beleuchtet, der in der xy-Ebene mit Hilfe der Scanner SX und SY verschoben wird. Hierzu wird die vorzugsweise linear polarisierte Lichtquelle LQ in den MDB über den Port 1 in P1 eingekoppelt. Das Licht der Lichtquelle LQ gelangt im folgenden auf vorzugsweise einen Bereich a) des AOTF S. Soll das Anregungslicht zur Probe gelangen, dann wird der AOTF so geschalten, dass die Polarisationsrichtung des Lichtes um 90° gedreht wird und das Anregungslicht gelangt zum Ausgang 2 des MDB.
Wird eine entsprechende akustische Welle mit angepasster Frequenz und Amplitude am AOTF angelegt, dann wird die Polarisationsrichtung des Anregungslichtes um einen Winkel ungleich 90° gedreht und somit gelangt je nach Polarisationsrichtung ein Teil des Lichtes zum Ausgang 2 und der verbleibende Anteil zum Ausgang 3. Am Ausgang 3 befindet sich eine Monitordiode M2 zur Bestimmung der Anregungslichtleistung, die als Regelgröße zum Ausgleich von Intensitätsschwankungen verursacht durch Kopplung in verschiedene Polarisationsrichtungen z.B. einer Glasfaser dienen kann. Weiterhin kann diese Betriebsart auch zum schnellen Abschalten bzw. Abschwächen von einzelnen Wellenlängen der Lichtquelle dienen.
Das in Richtung Ausgang 2 gekoppelte linear polarisierte Anregungslicht gelangt auf die Scanner SX und SY, die sich in einer zur rückwärtigen Brennebene des Objektiv (P3) konjugierten Pupillenebenen der Mikroskopanordnung befinden, so dass die Scanner den beugungsbegrenzt fokussierten Anregungspunkt in der xy Ebene der Probe bewegen können, d.h. die Probe abrastern. Die Abbildung in die Probe erfolgt über die Scanoptik (SO), die Tubuslinse (TL) und das Objektiv (O). Die Relayoptik (RL) erzeugt die konjugierten Pupillenebenen SX und SY der Mikroskopanordnung. Die Relayoptik kann in speziellen Anordnungen nach dem Stand der Technik auch weggelassen werden. Z.B. kann sie bei einer Verkürzung des Abstandes zwischen SX und SY entfallen.

Das von der Probe emittierte Licht wird durch die Optik O (z.B. ein Mikroskopobjektiv) gesammelt und gemeinsam mit der Tubuslinse TL in eine Zwischenbildebene ZB der Mikroskopeinrichtung abgebildet. Von dort gelangt es über die Scanner SX / SY und die Relayoptik RL wiederum auf den Eingang 2 des MDB. Da das von der Probe emittierte Licht meist unpolarisiert ist, wird es am Strahlteiler P2 in zwei senkrecht zueinander stehende Polarisationsrichtungen Pol1 und Pol2 zerlegt. Wird in der Probe beispielsweise Fluoreszenzlicht angeregt, dann ist das Spektrum des Lichtes aufgrund des Stokesshifts gegenüber dem Anregungslicht spektral verschoben. Somit dreht der AOTF S die Polarisation in den Bereichen a. und b. nicht. Das Element PO3 ist als Spiegel ausgebildet. Das Fluoreszenzlicht gelangt deshalb zum Ausgang 4. Das rückgestreute unpolarisierte Anregungslicht gelangt jedoch zum Ausgang 5, da die Polarisation durch die akustische Welle im AOTF (S) etsprechend der Einstellung des Anregungslichtes gedreht wird.

Im Anschluss wird das Licht der Probe, das durch den Ausgang 4 des MDB gelangt mit Hilfe einer abbildenden Optik (PO) durch eine konfokale Blende (PH) fokussiert, wodurch Detektionslicht, das außerhalb des Fokus entstand, unterdrückt wird. Bei einer nichtkonfokalen Detektion kann die Blende entfallen. Hinter der konfokalen Blende befindet sich ein Detektor (DE1), der die in der Probe angeregte Lichtstrahlung detektiert. Bei Aufnahme einer Fluoreszenz oder Lumineszenz kann zur zusätzlichen Unterdrückung des von der Probe rückgestreuten Anregungslichts bzw. zur Einschränkung des spektralen Detektionsbereichs ein Emissionsfilter (dichroitischer Filter) F eingeschwenkt werden.

Soll die Polarisation des emittierten Lichts der Probe detektiert werden (z.B. bei Bestimmung der Fluoreszenzanisotropie) dann kann dies mit 2 Detektoren erfolgen. Hierzu wird PO3 beispielsweise als Polarisator ausgebildet und am Ausgang 5 ein weiterer Detektor DE2 angeordnet. Zwischen PO3 und S wird eine lambda/2 Platte L/2 angeordnet, die Polarisation um 90° dreht. Die jeweilige Polarisation kann zusammengesetzt werden aus 2 Anteilen die senkrecht zueinander polarisiert sind. Die beiden senkrecht zueinander polarisierten Anteile werden getrennt mit DE1 und DE2. Durch anschließende Bildung des Verhältnisses der Signale der Detektoren DE1 und DE2 kann auf die jeweilige Polarisation geschlossen werden.
Das rückgestreute oder reflektierte Anregungslicht der Probe, das durch den Ausgang 5 des MDB gelangt, kann auch mit Hilfe einer abbildenden Optik (PO) durch eine konfokale Blende (PH) fokussiert werden, wodurch Detektionslicht, das außerhalb des Fokus entstand, unterdrückt wird. Hinter der konfokalen Blende befindet sich ein Detektor (DE2), der die von der Probe rückgestreute Anregungsstrahlung detektiert. Der Emissionsfilter F entfällt.

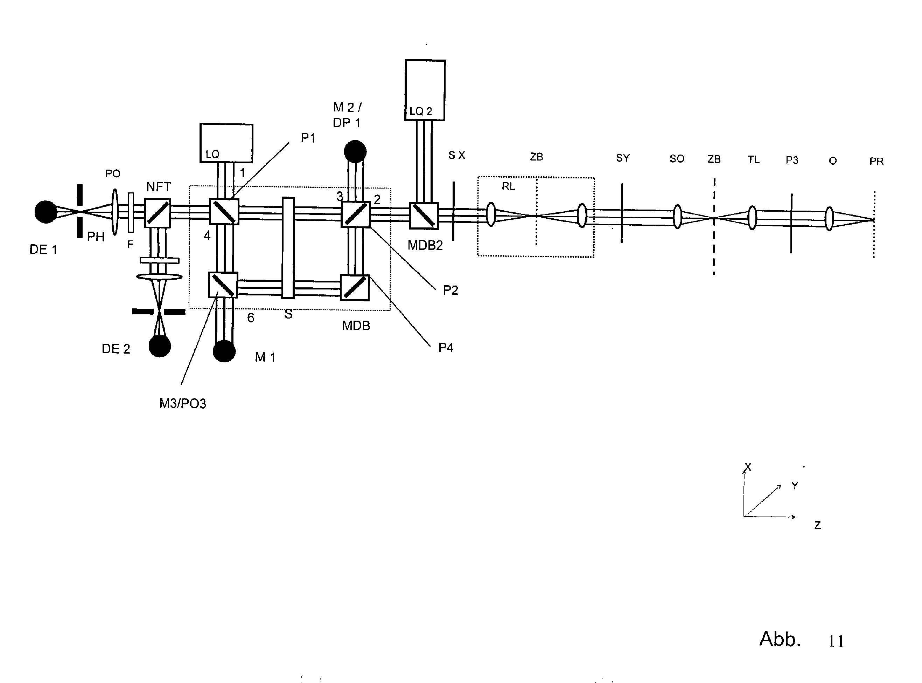

Abb. 11 zeigt schematisch eine weitere Ausbildung der erfindungsgemäßen Anordnung für ein Laserscanning Mikroskop (LSM) in der xz-Ebene in der eine weitere nicht durch den MDB 1 laufende Lichtquelle LQ2 gekoppelt wird.

Zusätzlich zu der bereits anhand Abb. 10 erläuterten Anordnung befindet sich am Ausgang 6 eine weitere Monitordiode M1. Wird die Anregungstrahlung nicht nur in einer Polarisationsrichtung Pol1 sondern auch in der Polarisationsrichtung Pol 2 gekoppelt, dann misst M1 die gekoppelte Leistung. Weicht das Messsignal M1 von einem Sollwert ab, dann kann entsprechend der AOTF S so angesteuert werden, dass an M2 ein weiterer entsprechender Sollwert eingestellt wird. Durch diese Regelung können Schwankungen der Koppeleffizienz z.B. in eine Glasfaser, die sich zwischen der Lichtquelle LQ und dem Eingang 1 des MDB befindet ausglichen werden. Die Koppeleffizienz und damit die in Richtung Probe gekoppelte Lichtleistung kann beispielsweise durch Dejustage der Einkopplung in die Glasfaser oder durch eine Kopplung in verschiedene Polarisationsrichtungen bei der polarisationserhaltenden Glasfaser beeinflusst werden.

In der Fluoreszenzmikroskopie werden derzeit verschiedenste Lichtquellen aus einem breiten Spektralbereich verwendet. Aufgrund einer geringeren Transmission des AOTF in bestimmten Wellenlängenbereichen z.B. bei UV-Lichtquellen (kleiner 400 nm) oder bei einer Multiphotonenanregung (größer 800 nm) ist ggf. die Kopplung der Lichtquellen durch den AOTF S nicht erwünscht. Diese Lichtquellen (LQ2) können entsprechend mit einem herkömmlichen Strahlteiler MDB2 zwischen dem Ausgang 2 und dem ersten Scanner z.B. SX mit den Lichtquellen LQ1, die den AOTF S durchlaufen, vereinigt werden. Die Detektion erfolgt bei diesen Lichtquellen meist im Wellenlängenbereich zwischen 400 und 800 nm, d.h. z.B. durch den AOTF S hindurch oder mit Detektoren nach dem Stand der Technik.

Das von der Probe emittierte Licht, das auf den Ausgang 4 des MDB 1 trifft, kann zusätzlich mit dichroitischen Strahlteilern NFT nach dem Stand der Technik auf verschiedene konfokale Detektoren (z.B. DE1 und DE2) aufgespalten werden.

In allen erfindungsgemäßen Anordnungen können Ausgänge auch entsprechend vertauscht werden.

Die MDB eignen sich auch für das Scannen von Regionen besonderen Interesses ROI (siehe EP977069A2) siehe Abb. 10. Hierbei wird das Laserlicht bestimmter Wellenlänge und Leistung nur für bestimmte durch den Nutzer vorgewählte Regionen freigegeben. Die Umschaltung der Wellenlänge bzw. die Einstellung der Anregungsleistung erfolgt durch entsprechende Ansteuerung des AOTF S, wodurch sich eine entsprechende Änderung des Polarisationszustandes ergibt.

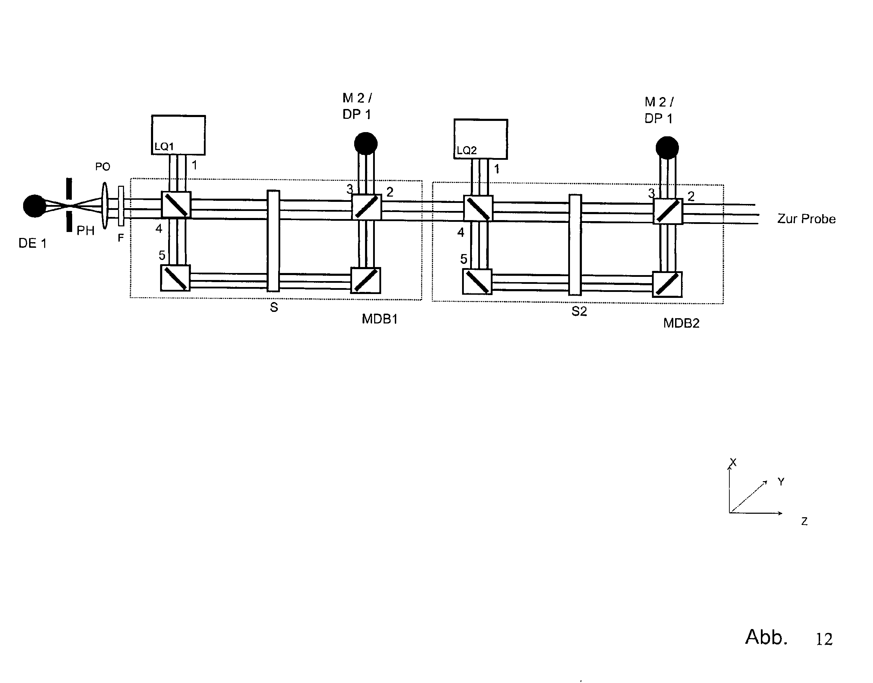

Grundsätzlich können auch mehrere erfindungsgemäße MDB Anordnungen hintereinander angeordnet werden. Hierzu wird beispielsweise der Ausgang (2) des ersten MDB in den Eingang (1) des zweiten MDB eingekoppelt (siehe vereinfachte schematische Abb. 12). Es können somit beispielsweise 2 Lichtquellenmodule (LQ 1 und LQ2) in einem gemeinsamen Probenstrahlengang gekoppelt werden.

Grundsätzlich kann die Funktion der dargestellten Scanner auch durch einen entsprechenden Scantisch (Objektscanner) ersetzt werden.

## Patentansprüche

1. Vorrichtung zur Steuerung von in einer Probe angeregter und/oder rückgestreuter und/oder reflektierter Lichtstrahlung, die eine oder mehrere Wellenlängen enthält, auf unterschiedliche Lichtausgänge, wobei eine Trennung der Lichtstrahlung in zueinander unterschiedlich polarisierte Komponenten erfolgt und die Komponenten der Anregungs- und/ oder Detektionsstrahlung mit Hilfe eines vorzugsweise die ordentliche und außerordentliche Brechzahl veränderndes, vorzugsweise doppelbrechenden, vorzugsweise akusto- oder elektrooptischen Mediums in ihrer Polarisation beeinflußt werden

2. Vorrichtung nach Anspruch 1,
wobei das Medium ein AOTF ist.

3. Vorrichtung nach Anspruch 1,
wobei der AOTF einen kolinearen Verlauf aufweist.

4. Vorrichtung nach Anspruch 1,
wobei das Medium ein EOM ist.

5. Vorrichtung nach Anspruch 1,
wobei das Medium eine lambda- Phasenplatte ist.

6. Vorrichtung nach einem der vorangehenden Ansprüche,
wobei eine spektrale räumliche Separierung der Lichtstrahlung erfolgt.

7. Vorrichtung nach einem der Ansprüche 1-6 ,
wobei von der Probe kommendes Fluoreszenzlicht und/oder Lumineszenzlicht und/oder Phosphoreszenzlicht und/oder diffus gestreutes Beleuchtungslicht detektiert wird.

8. Vorrichtung zur Steuerung des Beleuchtungslichtes nach einem der Ansprüche 1-7,
wobei Polarisationsmitteln zur Zerlegung in Komponenten unterschiedlicher Polarisation das Medium nachgeordnet ist

9. Vorrichtung zur Steuerung des von der Probe kommenden Lichtes nach einem der Ansprüche 1-8, wobei ersten Polarisationsmittel zur Zerlegung in Komponenten unterschiedlicher Polarisation das Medium sowie zweite Polarisationsmittel zur Zusammenführung der Komponenten nachgeordnet sind.

10. Kombination der Anordnungen nach Anspruch 8 und 9.

11. Vorrichtung nach einem der Ansprüche 1-10,
wobei eine tiefenaufgelöste Erfassung der Probe erfolgt

12. Vorrichtung nach einem der vorangehenden Ansprüche, in einem Laser-Scanning-Mikroskop.

13. Vorrichtung nach einem der vorangehenden Ansprüche, mit descannter Detektion.

14. Vorrichtung nach einem der vorangehenden Ansprüche, mit teildescannter Detektion in einer Richtung.

15. Vorrichtung nach einem der vorangehenden Ansprüche, mit nicht descannter Detektion.

16. Vorrichtung nach einem der vorangehenden Ansprüche, mit Zeilendetektor zur spektral aufgelösten Messung.

17. Vorrichtung nach einem der vorangehenden Ansprüche,
wobei eine Abtastung und/oder Detektion ausgewählter Probenbereiche erfolgt.

18. Vorrichtung nach einem der vorangehenden Ansprüche,
wobei eine Abtastung und/oder Detektion ausgewählter Probenbereiche erfolgt.

19. Vorrichtung nach einem der vorangehenden Ansprüche, wobei eine spektral aufgelöste Messung der Polarisationseigenschaften des Detektionslichts erfolgt.
